# EUROPEAN PATENT SPECIFICATION

(11) **EP 4 139 609 B1**
(45) Date of publication and mention of the grant of the patent: **26.11.2025**
(21) Application number: 20721503.9
(22) Date of filing: 22.04.2020
(51) Int. Cl.: F23B 30/00, F23G 5/30, F23B 10/00, F23C 6/02, F23C 10/00

(54) **A FLUIDIZED BED REACTOR SYSTEM AND A METHOD OF OPERATING A FLUIDIZED BED REACTOR SYSTEM**
WIRBELBETTREAKTORSYSTEM UND VERFAHREN ZUM BETRIEB EINES WIRBELBETTREAKTORSYSTEMS
SYSTÈME DE RÉACTEUR À LIT FLUIDISÉ ET PROCÉDÉ DE FONCTIONNEMENT D'UN SYSTÈME DE RÉACTEUR À LIT FLUIDISÉ

(43) Date of publication of application: 01.03.2023
(73) Proprietor: Sumitomo SHI FW Energia Oy, 02130 Espoo (FI)
(72) Inventor: PALONEN, Juha, 78850 Varkaus (FI)
(74) Representative: Genip Oy
(86) International application number: PCT/EP2020/061160
(87) International publication number: WO 2021/213643

(56) References cited:
- WO-A1-2017/142515
- JP-A- 2003 176 486
- US-A- 4 311 670

## Description

### BACKGROUND OF THE INVENTION

### Field of the Invention

The present invention relates to a fluidized bed reactor system and a method of operating a fluidized bed reactor system according to the appending independent claims. Thus, the invention relates to a reactor system comprising first and second fluidized bed reactors, such as a combustion reactor and a pyrolyzing or gasifying reactor.

### Description of related art

Maintaining balance between consumed electricity and electricity fed into the grid has, for example, due to the increase of less controllable solar and wind power led to stringent flexibility demands for combustion based power plants such as fluidized bed boilers. Corresponding stringent flexibility demands can also be given for fluidized bed reactors used for other purposes, such as for providing hot water or heat to an industrial process. The load, or heat output, of a fluidized bed combustion reactor, such as steam flow from a fluidized bed boiler, can generally be controlled by varying the rate of feeding fuel and oxygen containing combustion gas, usually air, to the reactor. However, the heat capacity of a fluidized bed combustion reactor is generally relatively large, which slows down the changes of the burning rate and the heat output. Thus, there are many situations in which the load change rate or load control range of a fluidized bed combustion reactor that is obtainable by only varying the rate of feeding fuel and combustion air is not sufficient, and more versatile control methods and corresponding fluidized bed reactor systems are needed.

In a more advanced circulating fluidized bed reactor control method known, for example, from the patent US 4,813,381 the amount of bed particles in the furnace is changed so as to adjust heat absorption therein. Patent documents US 4,674,560 and US 5,363,812 disclose control methods for a circulating fluidized bed reactor that are based on increasing or decreasing the amount of bed material that is collected to a bed material storage, whereby the bed density and the rate of heat recovery in the upper parts of the furnace can be varied.

Patent documents US 3,853,498, US 4,311,670, US 4,344,373 and WO 2008/071842 disclose control methods of a fluidized bed pyrolyzing reactor that is combined with a fluidized bed combustion reactor, wherein the thermal energy required for the operation of a pyrolyzer is obtained by circulating therein a controlled amount of hot solids from the combustion reactor.

Publication JP 2003176489 A discloses a circulating fluidized bed gasifier which comprises a gasification chamber and a solids separator connected to the gasification chamber for separating particles from the combustible gas. The separator is provided with a return channel for separated particles connected to the lower part of the gasification chamber. The return channel is provided with a char combustion chamber in which combustible material is combusted. Particles are returned from the combustion chamber to the gasification chamber serving as a heat source for thermally cracking the raw material in the gasification chamber. Flue gas from the combustion chamber is used for heat recovery while combustible gas is used for example for power recovery, power generation, chemical synthesis, and the like in later processes.

Publication WO 2017/142515 A1 discloses a two-stage product gas generation system wherein the first reactor generates first product gas from carbonaceous material. There is a separator which separates char from the first product gas. The separated char is fed to the second reactor. The second reactor produces the second product gas. A reactant used in the first reactor is heated in the second reactor. The second reactor is also provided with a separator which separates solids from the second product gas. Publication further discloses that solids from the second reactor may be transferred to the first reactor. The first and the second product gases are combined in a combined product gas conduit.

An object of the present invention is to provide a versatile fluidized bed reactor system and an advantageous method of operating the fluidized bed reactor system.

### SUMMARY OF THE INVENTION

The above cited problems of the prior art are solved or at least minimized by the solutions defined in the appended independent claims. The dependent claims define advantageous embodiments of the present invention.

According to one aspect, the present invention provides a method of controlling a reactor system comprising first and second fluidized bed reactors, a flue gas channel in gas flow connection with the first fluidized bed reactor and a product gas channel in gas flow connection with the second fluidized bed reactor, the method comprising the steps of feeding solid fuel and oxygen containing gas to the first fluidized bed reactor so as to form therein a fluidized bed of particles and combusting a first portion of the solid fuel in the fluidized bed of particles with the oxygen containing gas so as to generate hot bed particles and a first stream of hot flue gas, conveying the first stream of hot flue gas to the flue gas channel, transferring hot bed particles including a second portion of the solid fuel at a predetermined hot particles transfer rate from the first fluidized bed reactor to the second fluidized bed reactor, feeding fluidizing gas to the second fluidized bed reactor so as to form therein a second fluidized bed of particles, and transferring bed particles from the second fluidized bed reactor to the first fluidized bed reactor; wherein the method comprises first and second operation modes, in which first operation mode the fluidizing gas is oxygen containing gas and the method comprises the steps of combusting a portion of the second portion of the solid fuel in the second fluidized bed of particles so as to generate a second stream of hot flue gas, and conveying the second stream of hot flue gas to the flue gas channel, and in the second operation mode the fluidizing gas comprises steam, CO₂ or non-oxygen containing inert gas and the method comprises the steps of pyrolyzing or gasifying a portion of the second portion of the solid fuel in the second fluidized bed of particles so as to generate product gas, and conveying the product gas to the product gas channel.

As defined above, the reactor system, comprising first and second fluidized bed reactors, is used in in one of two different operation modes. Solid fuel and oxygen containing gas, usually air, are in operation always, i.e. in both first and second operation modes, fed to the first fluidized bed reactor. Therefore, solid fuel is always in operation burned in the first fluidized bed reactor, which can thus be called a combustion reactor, or a first combustion reactor. At least a portion of the oxygen containing gas is fed to the first fluidized bed reactor through a bottom grid so as to fluidize solid particles, comprising fuel particles and inert bed particles, such as sand or ash particles, in the reactor. Thereby, a portion of the solid fuel, so-called first portion of the solid fuel, is combusted in the first fluidized bed reactor.

By the combustion of the solid fuel in first fluidized bed reactor are generated hot bed particles and a stream of flue gas, so-called first stream of hot flue gas. A portion of the hot bed particles, including non-combusted solid fuel particles, are then transferred at a controlled rate, so-called hot particles transfer rate, from the first fluidized bed reactor to the second fluidized bed reactor. Temperature of the hot bed particles transferred to the second fluidized bed reactor generally corresponds to that of the bed particles in the first fluidized bed reactor, being usually at least 700°C.

Fluidizing gas, the composition of which depends on the operation mode, is generally fed to the second fluidized bed reactor fed through a bottom grid so as to form therein a second fluidized bed of particles. A stream of solid particles, comprising mainly ash, is generally discharged from the reactor system at one or more suitable portions of the system, for example, from the bottom of the combustion reactor. A particle transfer loop within the reactor system is completed by transferring bed particles from the second fluidized bed reactor back to the first fluidized bed reactor. Transfer of particles between the first and second fluidized bed reactors may, depending on the reactor system in question, be realized by any of several generally known methods, such as gravitationally, mechanically or pneumatically.

Each of the first and second fluidized bed reactors is advantageously a circulating fluidized bed reactor. Thereby, the transfer of particles may advantageously be performed by directing a portion of solid particles separated in a particle separator from the exhaust gas of a reactor to the other reactor. According to a preferred embodiment of the present invention, the second fluidized bed reactor is a circulating fluidized bed reactor and particles are transferred from its particle separator to the first fluidized bed reactor, whereas particles transferred to the opposite direction, to the second fluidized bed reactor, are taken from the lower portion of the first fluidized bed reactor. Reason for this is that usually solid particles taken from the lower portion of a combustion reactor comprise more non-combusted fuel particles than solid particles separated from the exhaust gas. Such non-combusted fuel particles are utilized, in both operation modes, in the second fluidized bed reactor.

According to the present invention, fluidizing gas fed in the first operation mode to the second fluidized bed reactor is oxygen containing gas, advantageously the same oxygen containing gas, usually air, as fed to the first fluidized bed reactor. Solid fuel, comprising, or consisting of, non-combusted solid fuel transferred from the first fluidized bed reactor, is thereby combusted in the second fluidized bed of particles. The second fluidized bed reactor is thus, for reasons to be explained, maintained in the first operation mode at a relatively high temperature. Especially when the amount of non-combusted solid fuel transferred from the first fluidized bed reactor to the second fluidized bed reactor is small, for example, due to high reactivity of the fuel, it may be useful to feed also auxiliary solid fuel directly to the second fluidized bed reactor. Generally the second fluidized bed reactor can in the first operation mode be maintained at the desired relatively high temperature either by controlling the particle transfer rate to a suitable level or by controlling the feed rate of the auxiliary fuel.

The second fluidized bed reactor operates in the first operation mode as a second combustion reactor that acts parallel to the first combustion reactor. More specifically, combustion of solid fuel in the second fluidized bed reactor generates flue gas, so-called second stream of hot flue gas, that is advantageously also conveyed to the flue gas channel, and is therein combined with the first stream of hot flue gas. Bed particles, which thus stay hot in the second fluidized bed reactor, are circulated back to the first fluidized bed reactor.

The flue gas channel advantageously comprises conventional heat recovery means, such as air preheaters, economizers, evaporators and superheaters. The flue gases are then advantageously cooled, and the energy is nearly completely recovered, in a conventional water/steam circuit. The walls enclosing the furnace of the second fluidized bed reactor are preferably covered with a relatively thick layer of refractory, whereby the reactor can be maintained at a desired temperature without any significant heat losses. Thus, the heat output or the steam production rate of the reactor system according to the present invention is in the first operation mode at least nearly the same as it would be if all the fuel would be combusted in a single reactor.

When the reactor system is switched from the first operation mode to the second operation mode, the fluidizing gas fed to the second fluidized bed reactor is changed from the original oxygen containing gas to a gas comprising steam, CO₂ or non-oxygen containing inert gas, which causes solid fuel to be pyrolyzed or gasified in the second fluidized bed reactor. Thus, in the second operation mode the second fluidized bed reactor utilizes hot bed particles conveyed from the first fluidized bed reactor and operates as a pyrolyzer or as an indirect gasifier.

As explained above, the solid fuel pyrolyzed or gasified in the second operation mode in the second fluidized bed reactor comprises the second portion of solid fuel originally fed to the first fluidized bed reactor. Moreover, it is possible, even in the second operation mode, to feed auxiliary solid fuel directly to the second fluidized bed reactor. Pyrolyzing or gasifying solid fuel in the second fluidized bed reactor generates product gas that is conveyed to the product gas channel. The product gas is then directed to any conventional use, for example, via a cooling stage into a synthesis process treatment.

Switching the reactor system from the first operation mode to the second operation mode is advantageously performed in order to efficiently ramp down the first fluidized bed reactor, i.e. to rapidly and/or to a large extend decrease the load or heat output of the combustion reactor. Decrease of the heat output is partly based on not anymore conveying flue gas from the second fluidized bed reactor to the flue gas channel. Also, because the process taking place in the second fluidized bed reactor is changed from exothermic combustion process to endothermic pyrolysis or gasification process, the temperature in the second fluidized bed reactor inevitably decreases. Thus, the temperature of the solid particles returned from the second fluidized bed reactor to the first fluidized reactor is lower in the second operation mode than in the first operation mode, whereby the heat output from the combustion reactor tends to decrease. According to a preferred embodiment of the present invention, the temperature of the bed particles transferred from the second fluidized bed reactor to the first fluidized bed reactor is in the second operation mode at least 20°C lower than in the first operation mode.

The predetermined hot particles transfer rate and the rate of feeding fluidizing gas to the second fluidized bed reactor are advantageously in the first operation mode controlled so as to maintain the second fluidized bed reactor in a predetermined relatively high temperature, preferably in temperature of at least, for example, 600°C, or even more preferably in temperature of at least 400°C. Maintaining the second fluidized bed reactor in the first operation mode at such a high temperature is useful for being able to very rapidly start the second operation mode, i.e. gasifying or pyrolyzing solid fuel.

Both gasifier and pyrolyzer reactors are typically of a refractory lined design, with a limited heat up rate (50-70°C/h) of the refractories, whereby their start-up time from ambient temperature is typically 15-20 hours. When operating as a stand-alone unit this slow heat up phase is generally not a problem. However, if the gasifier or pyrolyzer is connected to a fluidized bed boiler to be used for assisting in the boiler load changes, the slow heat up rate is not allowable. According to the present invention, the second operation mode of the second fluidized bed reactor can be started much faster than what would have been possible by starting to transfer solid fuel from the combustion reactor to the second reactor maintained, for example, at ambient temperature. Thus the present invention renders it possible to achieve a very fast ramp down rate of the heat output of the combustion process in the reactor system, for example, to compensate power variations in the grid due to changing solar and wind power.

As a further aspect, the present invention provides a method of rapid ramp up of the combustion system by switching of the reactor system from the second operation mode to the first operation, which process can advantageously be further enhanced by firing compressed product gas in the first fluidized bed reactor or in a separate superheater chamber of the first fluidized bed reactor.

Another main aspect or advantage of the present invention is that it renders possible to lower the minimum load of the fluidized bed reactor, more particularly, of the first fluidized bed reactor. Reason for this is that transferring hot solid particles from the first fluidized bed reactor to the second fluidized bed reactor, and returning particles at a lower temperature back to the first fluidized bed reactor, due to using heat of the solids in the pyrolyzing or gasification process in the second fluidized bed reactor, leads to decreased heat output from the first fluidized bed reactor.

The hot particles transfer rate from the first fluidized bed reactor to the second fluidized bed reactor is preferably in the second operation mode controlled so as to maintain the second fluidized bed reactor at least at a predefined pyrolyzing or gasifying temperature, which temperature is preferably at least 500°C, or even more preferably at least 400°C. In order to enhance the load change rate of the combustion reactor, the predetermined hot particles transfer rate, i.e. particle transfer rate from the first fluidized bed reactor to the second fluidized bed reactor, is advantageously in the second operation mode at least 30 % higher than in the first operation mode.

The load change rate of the combustion reactor may advantageously also be enhanced by having the transfer rate of hot bed particles both from the first fluidized bed reactor to the second fluidized bed reactor and that of bed particles from the second fluidized bed reactor to the first fluidized bed reactor controlled so that the bed inventory, i.e. amount of bed particles, in the first fluidized bed reactor is in the second operation mode smaller than that in the first operation mode. Thus, the above described embodiment of the present invention corresponds to that described in patent documents US 4,674,560 and US 5,363,812 in that load of a combustion reactor is varied by collecting a controlled amount of bed material from the combustion reactor to a separate vessel. However, the method according to the present invention differs from that described in the patent documents US 4,674,560 and US 5,363,812 in that the material collecting vessel is not just a storage but a product gas generating pyrolyzing or gasifying reactor, which gives rise to generation of useful product gas and to efficient cooling of the collected material.

According to another aspect, the present invention provides a fluidized bed reactor system comprising first and second fluidized bed reactors, means for feeding solid fuel and oxygen containing gas to the first fluidized bed reactor, a flue gas channel in gas flow connection with the first fluidized bed reactor, means for transferring bed particles from the first fluidized bed reactor to the second fluidized bed reactor, means for feeding fluidizing gas to the second fluidized bed reactor, and means for transferring bed particles from the second fluidized bed reactor to the first fluidized bed reactor, wherein the means for feeding fluidizing gas is in controllable fluidizing gas flow connection with the means for feeding combustion oxygen containing gas and with a means for feeding steam, CO₂ or non-oxygen containing inert gas; the second fluidized bed reactor is in controllable exhaust gas flow connection with the flue gas channel and with a product gas channel.

The above brief description, as well as further objects, features, and advantages of the present invention will be more fully appreciated by reference to the following detailed description of the presently preferred, but nonetheless illustrative, embodiments in accordance with the present invention, when taken in conjunction with the accompanying drawings.

### BRIEF DESCRIPTION OF THE DRAWINGS

Figure 1 schematically illustrates an arrangement according to a first preferred embodiment of the present invention.
Figure 2 schematically illustrates an arrangement according to a second preferred embodiment of the present invention.
Figure 3 schematically illustrates an arrangement according to a third preferred embodiment of the present invention.

### DETAILED DESCRIPTION OF THE INVENTION

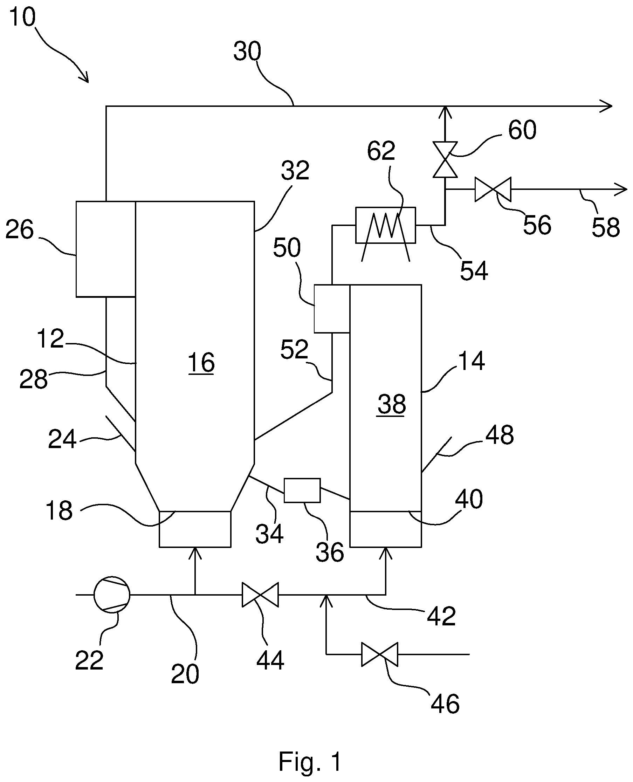

The diagram of Fig. 1 schematically illustrates a fluidized bed reactor system 10 according to a preferred embodiment of the present invention. The reactor system comprises a first fluidized bed reactor 12 and a second fluidized bed reactor 14. In the embodiment shown in Fig. 1, both first and second fluidized bed reactors are circulating fluidized bed reactors, but alternatively either one or both of the reactors could be other kind of fluidized bed reactor, such as a bubbling bed reactor.

The first fluidized bed reactor 12 is a steam generator, i.e. boiler, and comprises a furnace 16 with a bottom grid 18 connected by an air channel 20 to an air supply 22, i.e. to an air feeding fan, means for feeding solid fuel 24, a particle separator 26 connected to the upper portion of the furnace, a return duct 28 for returning particles separated in the particle separator 26 to the lower portion of the furnace, and a flue gas channel 30 for conveying cleaned flue gas from the particle separator 26 to a back pass. The return duct 28 comprises advantageously also a conventional gas-lock (not shown in Fig. 1).

Walls 32 enclosing the furnace 16 of the first fluidized bed reactor 12 are of conventional evaporative tube-wall construction and the back pass comprises conventional heat recovery devices, such as an air preheater, economizers and superheaters, and flue gas cleaning devices, such as a fly ash collector and a wet or dry flue gas desulfurizer. Because such devices are well-known to persons skilled in the art and not specifically relevant for the present invention, they are not shown in Fig. 1 or described here in more details. The furnace 16 of the first fluidized bed reactor 12 comprises advantageously also conventional means for discharging bottom ash (not shown in Fig. 1) from the bottom portion of the furnace.

To the lower portion of the furnace 16 of the first fluidized bed reactor 12 is connected a particle transfer channel 34 equipped with a gas-lock forming particle flow controller 36, such as a fluidized bed, mechanical or pneumatic flow controller, for conveying hot bed particles at a controlled rate from the furnace 16 of the first fluidized bed reactor 12 to a furnace 38 of the second fluidized bed reactor 14. The furnace 38 of the second fluidized bed reactor comprises a bottom grid 40, which is connected via a fluidizing gas channel 42 and a valve 44 to the air channel 20 of the first fluidized bed reactor 12, and also via a valve 46 to a steam supply (not shown in Fig. 1). The furnace 38 of the second fluidized bed reactor 14 is also equipped with means for feeding solid fuel 48, and a particle separator 50 connected to the upper portion of the furnace of the second fluidized bed reactor 14. Walls enclosing the furnace 38 of the second fluidized bed reactor 14 are preferably covered with a relatively thick layer of refractory.

The lower portion of the particle separator 50 of the second fluidized bed reactor 14 is connected via a second particle transfer channel 52 to the furnace 16 of the first fluidized bed reactor 12 for returning particles separated in the particle separator of the second fluidized bed reactor to the first fluidized bed reactor. The particle separator 50 of the second fluidized bed reactor 14 may also be equipped with a return duct (not shown in Fig. 1), similarly as the return duct 28 of the particle separator 26 of the first fluidized bed reactor 12, for returning a portion of the separated particles to the lower portion of the furnace 38 of the second fluidized bed furnace 14. The particle transfer channel 52 and/or the return duct (not shown in Fig. 1) of the particle separator 50 of the second fluidized bed reactor 14 is advantageously equipped with means for controlling (not shown in Fig. 1) the shares of particles which are returned to the furnace 38 of the second fluidized bed reactor 14 and particles which are transferred to the furnace 16 of the first fluidized bed reactor 12, respectively. The second particle transfer channel 52, and/or the return duct (not shown in Fig. 1) of the particle separator 50 of the second fluidized bed reactor 14, may thus be equipped with a particle flow controller (not shown in Fig. 1), such as a fluidized bed, mechanical or pneumatic flow controller, for conveying separated particles at a controlled rate into the furnace/s. The second particle transfer channel 52, as well as the return channel (not shown in Fig. 1) of the particle separator 50 of the second fluidized bed reactor 14, advantageously also comprises a gas-lock (not shown in Fig. 1), preferably as a part of the above described particle flow controller, to prevent gas flow from the furnace/s to the particle separator 50.

The upper portion of the particle separator 50 is connected to an exhaust gas channel 54 which is via a valve 56 connected to a product gas channel 58 and via another valve 60 to the flue gas channel 30. The product gas channel generally comprises product gas cooling surfaces, such as heat transfer surfaces 62 as shown in Fig. 1, in the exhaust gas channel 54, and leads to conventional means for utilizing the product gas, such as devices for synthesis process treatment (not shown in Fig. 1).

The fluidized bed reactor system is advantageously operated in one of first and second operating modes, wherein the furnace 16 of the first fluidized bed reactor 12 is always in operation operated as a circulating fluidized bed boiler that is in a relatively small flow solids circulation with the furnace 38 of the second fluidized bed reactor 14, which solids flow circulation is controlled by the particle flow controller 36 in the particle transfer channel 34.

In the first operation mode the valve 44 between the air channel 20 and the fluidizing gas channel 42 is open and both first and second fluidized bed reactors, 12, 14, are fluidized with air. Thereby the both fluidized bed reactors operate as a combustion reactor. The valve 46 is closed so that steam is not supplied from the steam supply into the fluidizing gas channel 42. In the first operation mode also the valve 60 between the exhaust gas channel 54 and flue gas channel 30 is open, whereby flue gas from combustion processes in the both fluidized bed reactors 12, 14 are conveyed to the flue gas channel 30. Respectively, the valve 56 to the product gas channel 58 is closed. At least a portion of particles separated in the particle separator 50 of the second fluidized bed reactor 14 are returned via the second particle transfer channel 52 to the furnace 16 of the first fluidized bed reactor 12.

The purpose of the first operating mode is to generate steam with a good efficiency and to keep the furnace 38 of the second fluidized bed reactor 14 in a temperature which enables its rapid switching to a pyrolyzing or gasification mode. The desired temperature is achieved by controlling the rate of transferring hot solids from the furnace 16 of the first fluidized bed reactor by the particle flow controller 36 and/or by feeding auxiliary fuel to the furnace 38 of the second fluidized bed reactor 14 by the solid fuel feeder 48. When rapid ramp down of the combustion process in the reactor system 10 is needed, the rate of transferring hot solids from the first fluidized bed reactor 12 to the second fluidized bed reactor 14 is increased and the second fluidized bed reactor is shifted to a gasifier or pyrolyzing mode by closing the valve 44 and opening the valve 46 to fluidize the fluidized bed in the furnace 38 with steam. In the gasifying or pyrolyzing mode of the second fluidizing reactor 38 the valve 60 to the flue gas channel 30 is closed and the valve 56 to the product gas channel 58 is opened so as to convey the generated product gas to other use. Auxiliary fuel is generally in the gasifying or pyrolyzing mode fed via the fuel feeder 48 to the furnace 38 of the second fluidized bed reactor 14.

Above is described an embodiment in which the fluidizing gas of the first fluidized bed reactor is air, but in other embodiments of the present invention the fluidizing gas can alternatively be other oxygen containing gas, such as a mixture of oxygen and CO₂ rich gas. In the above described embodiment, the first fluidized bed reactor is a boiler, but in other embodiments of the present invention the first fluidized bed reactor can alternatively be other fluidized bed reactor, such as an incinerator generating steam or hot water to another use. Above is described an embodiment in which the second fluidized bed reactor is in the second operating mode fluidized with steam, but in other embodiments of the present invention the second fluidized bed reactor can in the second operating mode be fluidized with another gasifying or pyrolyzing inducing gas, such as CO₂ or non-oxygen containing inert gas, or with a mixture of such gases.

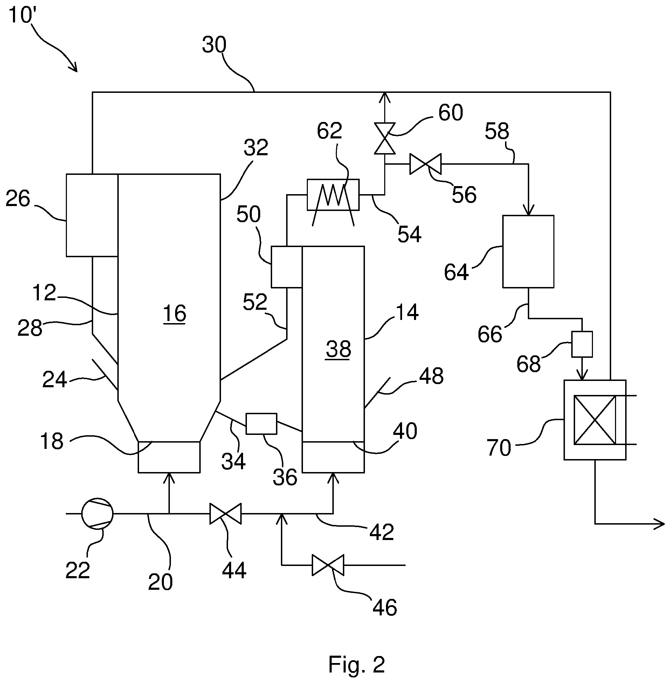

The diagram of Fig. 2 schematically illustrates a fluidized bed reactor system 10' according to another preferred embodiment of the present invention. The embodiment shown in Fig. 2 differs from that shown in Fig. 1 mainly in that product gas produced in the second operation mode in the second fluidized bed reactor 14 is conveyed via the channel 58 to a product gas storage 64. The product gas storage is advantageously associated with means (not shown in Fig. 2) for compressing the product gas. The product gas storage 64 is according to the embodiment shown in Fig. 2 connected via a channel 66 to a burner 68 arranged to produce and convey hot gas to a superheater chamber 70 arranged in the flue gas channel 30 of the first fluidized bed reactor 12. While the reactor system and the method of controlling a reactor system described in connection with Fig. 1 are directed to enable especially rapid ramp down of a combustion process, by switching from the first operation mode to the second operation mode, the arrangement shown in Fig. 2 is directed to also enable rapid ramp up of the combustion process.

Rapid ramp up of the combustion process is advantageously realized by switching from the second operation mode to the first operation mode and by simultaneously firing by the burner 68 product gas collected during the second operation mode in the product gas storage 64 so as to rapidly increase superheating of steam in the superheater chamber 70. Alternatively, product gas collected to the product gas chamber 64 can be fired at any time, during either first or second operation mode, when rapid increase of the heat output of the boiler is desired.

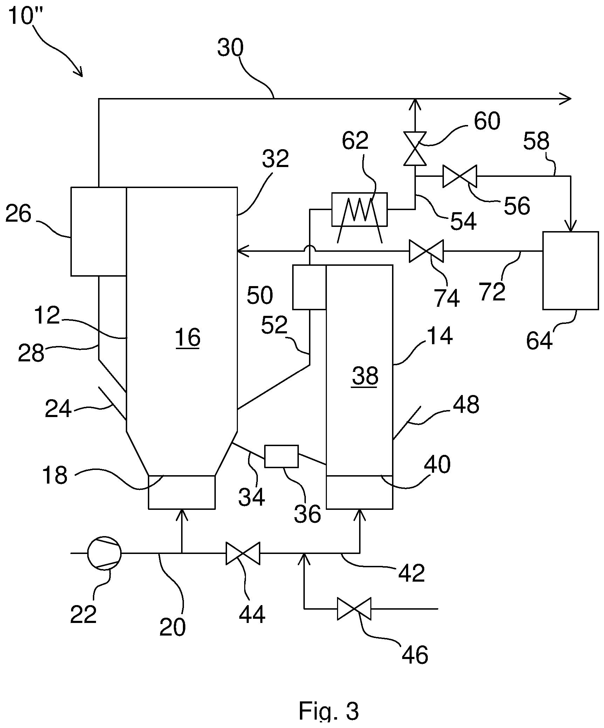

The diagram of Fig. 3 schematically illustrates a fluidized bed reactor system 10" according to still another preferred embodiment of the present invention. The embodiment shown in Fig. 3 differs from that shown in Fig. 2 in that product gas collected in the product gas storage 64 is not conveyed to a superheater chamber 70 but via a channel 72 with a valve 74 to the furnace 16 of the first fluidized bed reactor 12. Thereby, product gas collected in the product gas storage 64 can be used, when desired, to rapidly increase temperature in the furnace 16 of the first fluidized bed actor 12 to increase the heat output of the first fluidized bed reactor.

Alternatively, in Figs. 2 and 3, the product gas channel 58 can be divided in two branches one directed into the product gas storage 64 and the other into the product gas upgrading such as leading to conventional means for utilizing the product gas, such as devices for synthesis process treatment (not shown in figures 2 and 3). It is also possible to combine any of the embodiments described above into one, as technically feasible.

While the invention has been described herein by way of examples in connection with what are at present considered to be the most preferred embodiments, it is to be understood that the invention is not limited to the disclosed embodiments, but is intended to cover various combinations or modifications of its features and several other applications, as far as included within the scope of the invention as defined in the appended claims.

## Claims

1. A method of controlling a reactor system comprising first and second fluidized bed reactors (12, 14), a flue gas channel (30) in gas flow connection with the first fluidized bed reactor (12) and a product gas channel (58) in gas flow connection with the second fluidized bed reactor, the method comprising the steps of
- feeding solid fuel (24) and oxygen containing gas (22,20) to the first fluidized bed reactor (12) so as to form therein a fluidized bed of particles and combusting a first portion of the solid fuel in the fluidized bed of particles with the oxygen containing gas so as to generate hot bed particles and a first stream of hot flue gas,
- conveying the first stream of hot flue gas to the flue gas channel (30),
- transferring (34,36) hot bed particles including a second portion of the solid fuel at a predetermined hot particles transfer rate from the first fluidized bed reactor (12) to the second fluidized bed reactor (14),
- feeding fluidizing gas (42) to the second fluidized bed reactor (14) so as to form therein a second fluidized bed of particles, and
- transferring (52) bed particles from the second fluidized bed reactor (14) to the first fluidized bed reactor (12);
wherein the method comprises first and second operation modes, in which first operation mode the fluidizing gas is oxygen containing gas and the method comprises the steps of
- combusting a portion of the second portion of the solid fuel in the second fluidized bed of particles so as to generate a second stream of hot flue gas, and
- conveying the second stream of hot flue gas to the flue gas channel (30),
and in which second operation mode the fluidizing gas comprises steam, CO₂ or non-oxygen containing inert gas and the method comprises the steps of
- pyrolyzing or gasifying a portion of the second portion of the solid fuel in the second fluidized bed of particles so as to generate product gas, and
- conveying the product gas to the product gas channel (58).

2. The method of controlling a reactor system according to claim 1, **characterized in that** the first fluidized bed reactor (12) is ramped down by switching the reactor system from the first operation mode to the second operation mode.

3. The method of controlling a reactor system according to claim 2, **characterized in that** the predetermined hot particles transfer rate is in the second operation mode at least 20 % higher than in the first operation mode.

4. The method of controlling a reactor system according to claim 1, **characterized in that** in the first operation mode the predetermined hot particles transfer rate and the rate of feeding fluidizing gas are controlled so as to maintain the second fluidized bed reactor (14) at least at a predefined temperature.

5. The method of controlling a reactor system according to claim 4, **characterized in that** the predefined temperature is at least 400°C.

6. The method of controlling a reactor system according to claim 1, **characterized in that** the predetermined hot particles transfer rate is in the second operation mode controlled so as to maintain the second fluidized bed reactor (14) at least at a predefined pyrolyzing or gasifying temperature.

7. The method of controlling a reactor system according to claim 6, **characterized in that** the predefined pyrolyzing or gasifying temperature is at least 400°C.

8. The method of controlling a reactor system according to any of the preceding claims, **characterized in that** the second operation mode comprises a step of feeding second solid fuel to the second fluidized bed reactor (14).

9. A fluidized bed reactor system (10, 10', 10") comprising
- first and second fluidized bed reactors (12,14), wherein the first fluidized bed reactor (12) comprising a particle separator (26) and a flue gas channel (30) for conveying flue gas from the particle separator (26) to a back pass, and the second fluidized bed reactor (14) comprising an exhaust gas channel (54),
- means for feeding solid fuel (24) and means for feeding oxygen containing gas (22, 20) to the first fluidized bed reactor (12),
- means for transferring bed particles (34, 36) from the first fluidized bed reactor (12) to the second fluidized bed reactor (14),
- means for feeding fluidizing gas (42) to the second fluidized bed reactor which is in controllable gas flow connection (46) with a supply of at least one of steam, CO₂ and non-oxygen containing inert gas,, and
- means for transferring bed particles (52) from the second fluidized bed reactor (14) to the first fluidized bed reactor (12),
wherein
- the means for feeding fluidizing gas (42) to the second fluidized bed reactor (14) is in controllable gas flow connection (44) with the means for feeding oxygen containing gas (22, 20) to the first fluidized bed reactor (12), and
- the exhaust gas channel (54) of the second fluidized bed reactor (14) is in controllable flow connection (56,60) with the flue gas channel (30) of the first fluidized bed reactor (12) and with a product gas channel (58) of the second fluidized bed reactor (14).

10. The fluidized bed reactor system according to claim 9, **characterized in that** the means for transferring bed particles (34) from the first fluidized bed reactor to the second fluidized bed reactor comprises a particle flow controller (36).

11. The fluidized bed reactor system according to claim 10, **characterized in that** the particle flow controller (36) is a mechanical or pneumatic flow controller or comprises a fluidized bed.

12. The fluidized bed reactor system according to claim 11, **characterized in that** the means for feeding fluidizing gas comprises a channel with a valve (44) to a supply of oxygen containing gas and a channel with a valve (46) to a supply of steam, CO₂ or non-oxygen containing inert gas.

13. The fluidized bed reactor system according to claim 9, **characterized in that** the controllable exhaust gas flow connection comprises a channel with a valve (60) to the flue gas channel (30) and a channel with a valve (56) to the product gas channel.

14. The fluidized bed reactor system according to claim 9, **characterized in that** the product gas channel (58) is in gas flow connection with a product gas storage (64) that is in gas flow connection with a burner (68) arranged to produce and convey hot gas to a superheater chamber (70) arranged in the flue gas channel (30).

15. The fluidized bed reactor system according to claim 9, **characterized in that** the product gas channel (58) is in gas flow connection with a product gas storage (64) that is in gas flow connection with the first fluidized bed reactor (12).

## Patentansprüche

1. Verfahren zum Steuern einer Reaktoranlage, die einen ersten und einen zweiten Wirbelschichtreaktor (12, 14), einen Rauchgaskanal (30) in Gas-Strömungsverbindung mit dem ersten Wirbelschichtreaktor (12) und einen Produktgaskanal (58)in Gas-Strömungsverbindung mit dem zweiten Wirbelschichtreaktor umfasst, wobei das Verfahren die folgenden Schritte umfasst:
- Zuführen von festem Brennstoff (24) und sauerstoffhaltigem Gas (22, 20) zu dem ersten Wirbelschichtreaktor (12), um so in demselben eine Wirbelschicht aus Teilchen zu erzeugen, und Verbrennen eines ersten Anteils des festen Brennstoffs in der Wirbelschicht aus Teilchen mit dem sauerstoffhaltigen Gas, um so heiße Bett-Teilchen und einen ersten Strom von heißem Rauchgas zu erzeugen,
- Befördern des ersten Stroms von heißem Rauchgas zu dem Rauchgaskanal (30),
- Weiterleiten (34, 36) von heißen Bett-Teilchen, die einen zweiten Anteil des festen Brennstoffs einschließen, mit einer vorbestimmten Weiterleitungsgeschwindigkeit heißer Bett-Teilchen von dem ersten Wirbelschichtreaktor (12) zu dem zweiten Wirbelschichtreaktor (14),
- Zuführen von Wirbelbettgas (42) zu dem zweiten Wirbelschichtreaktor (14), um so in demselben eine zweite Wirbelschicht aus Teilchen zu erzeugen, und
- Weiterleiten (52) von Bett-Teilchen von dem zweiten Wirbelschichtreaktor (14) zu dem ersten Wirbelschichtreaktor (12),
wobei
das Verfahren einen ersten und einen zweite Betriebsmodus umfasst, wobei in dem ersten Betriebsmodus das Wirbelschichtgas ein sauerstoffhaltiges Gas ist und das Verfahren die folgenden Schritte umfasst:
- Verbrennen eines Anteils des zweiten Anteils des festen Brennstoffs in der zweiten Wirbelschicht aus Teilchen, um so einen zweiten Strom von heißem Rauchgas zu erzeugen, und
- Befördern des zweiten Stroms von heißem Rauchgas zu dem Rauchgaskanal (30),
und wobei in dem zweiten Betriebsmodus das Wirbelbettgas Dampf, CO₂ oder ein nichtsauerstoffhaltiges inertes Gas umfasst und das Verfahren die folgenden Schritte umfasst:
- Pyrolysieren oder Vergasen eines Anteils des zweiten Anteils des festen Brennstoffs in der zweiten Wirbelschicht aus Teilchen, um so ein Produktgas zu erzeugen, und
- Befördern des Produktgases zu dem Produktgaskanal (58) .

2. Verfahren zum Steuern einer Reaktoranlage nach Anspruch 1, **dadurch gekennzeichnet, dass** der erste Wirbelschichtreaktor (12) durch Umschalten der Reaktoranlage von dem ersten Betriebsmodus zu dem zweiten Betriebsmodus heruntergefahren wird.

3. Verfahren zum Steuern einer Reaktoranlage nach Anspruch 2, **dadurch gekennzeichnet, dass** die vorbestimmte Weiterleitungsgeschwindigkeit heißer Bett-Teilchen in dem zweiten Betriebsmodus mindestens 20 % höher ist als in dem ersten Betriebsmodus.

4. Verfahren zum Steuern einer Reaktoranlage nach Anspruch 1, **dadurch gekennzeichnet, dass** in dem ersten Betriebsmodus die vorbestimmte Weiterleitungsgeschwindigkeit heißer Teilchen und die Geschwindigkeit des Zuführens von Wirbelschichtgas geregelt werden, um so den zweiten Wirbelschichtreaktor (14) zumindest bei einer vordefinierten Temperatur zu halten.

5. Verfahren zum Steuern einer Reaktoranlage nach Anspruch 4, **dadurch gekennzeichnet, dass** die vordefinierte Temperatur mindestens 400 °C beträgt.

6. Verfahren zum Steuern einer Reaktoranlage nach Anspruch 1, **dadurch gekennzeichnet, dass** in dem zweiten Betriebsmodus die vorbestimmte Weiterleitungsgeschwindigkeit heißer Teilchen geregelt wird, um so den zweiten Wirbelschichtreaktor (14) zumindest bei einer vordefinierten Pyrolisierungs- oder Vergasungstemperatur zu halten.

7. Verfahren zum Steuern einer Reaktoranlage nach Anspruch 6, **dadurch gekennzeichnet, dass** die vordefinierte Pyrolisierungs- oder Vergasungstemperatur mindestens 400 °C beträgt.

8. Verfahren zum Steuern einer Reaktoranlage nach einem der vorhergehenden Ansprüche, **dadurch gekennzeichnet, dass** der zweite Betriebsmodus einen Schritt des Zuführens eines zweiten festen Brennstoffs zu dem zweiten Wirbelschichtreaktor (14) umfasst.

9. Wirbelschicht-Reaktoranlage (10, 10', 10"), die Folgendes umfasst:
- einen ersten und einen zweiten Wirbelschichtreaktor (12, 14), wobei der erste Wirbelschichtreaktor (12) einen Teilchenabscheider (26) und einen Rauchgaskanal (30) zum Befördern von Rauchgas von dem Teilchenabscheider (26) zu einem Nachschaltzug umfasst und der zweite Wirbelschichtreaktor (14) einen Abgaskanal (54) umfasst,
- Mittel zum Zuführen von festem Brennstoff (24) und Mittel zum Zuführen von sauerstoffhaltigem Gas (22, 20) zu dem ersten Wirbelschichtreaktor (12),
- Mittel zum Weiterleiten von Bett-Teilchen (34, 36) von dem ersten Wirbelschichtreaktor (12) zu dem zweiten Wirbelschichtreaktor (14),
- Mittel zum Zuführen von Wirbelbettgas (42) zu dem zweiten Wirbelschichtreaktor, die in regelbarer Gasströmungsverbindung (46) mit einer Zufuhr von mindestens einem von Dampf, CO₂ und nichtsauerstoffhaltigem inertem Gas stehen, und
- Mittel zum Weiterleiten von Bett-Teilchen (52) von dem zweiten Wirbelschichtreaktor (14) zu dem ersten Wirbelschichtreaktor (12),
wobei
- die Mittel zum Zuführen von Wirbelbettgas (42) zu dem zweiten Wirbelschichtreaktor (14) in regelbarer Gasströmungsverbindung (44) mit den Mitteln zum Zuführen von sauerstoffhaltigem Gas (22, 20) zu dem ersten Wirbelschichtreaktor (12) stehen und
- der Abgaskanal (54) des zweiten Stroms Wirbelbettreaktors (14) in regelbarer Strömungsverbindung (56, 60) mit dem Rauchgaskanal (30) des ersten Wirbelbettreaktors (12) und mit einem Produktgaskanal (58) des zweiten Wirbelbettreaktors (14) steht.

10. Wirbelschicht-Reaktoranlage nach Anspruch 9, **dadurch gekennzeichnet, dass** die Mittel zum Weiterleiten von Bett-Teilchen (34) von dem ersten Wirbelschichtreaktor zu dem zweiten Wirbelschichtreaktor einen Teilchenströmungsregler (36) umfassen.

11. Wirbelschicht-Reaktoranlage nach Anspruch 10, **dadurch gekennzeichnet, dass** der Teilchenströmungsregler (36) ein mechanischer oder pneumatischer Strömungsregler ist oder eine Wirbelschicht umfasst.

12. Wirbelschicht-Reaktoranlage nach Anspruch 11, **dadurch gekennzeichnet, dass** die Mittel zum Zuführen von Wirbelbettgas einen Kanal mit einem Ventil (44) zu einer Zufuhr von sauerstoffhaltigem Gas und einem Ventil (46) zu einer Zufuhr von Dampf, CO₂ oder nichtsauerstoffhaltigem inertem Gas umfassen.

13. Wirbelschicht-Reaktoranlage nach Anspruch 9, **dadurch gekennzeichnet, dass** die regelbare Abgas-Strömungsverbindung einen Kanal mit einem Ventil (60) zu dem Rauchgaskanal (30) und einen Kanal mit einem Ventil (56) zu dem Produktgaskanal umfasst.

14. Wirbelschicht-Reaktoranlage nach Anspruch 9, **dadurch gekennzeichnet, dass** der Produktgaskanal (58) in Gas-Strömungsverbindung mit einem Produktgasspeicher (64) steht, der in Gas-Strömungsverbindung mit einem Brenner (68) steht, der angeordnet ist, um heißes Gas zu erzeugen und zu einer Überhitzerkammer (70) zu befördern, die in dem Rauchgaskanal (30) angeordnet ist.

15. Wirbelschicht-Reaktoranlage nach Anspruch 9, **dadurch gekennzeichnet, dass** der Produktgaskanal (58) in Gas-Strömungsverbindung mit einem Produktgasspeicher (64) steht, der in Gas-Strömungsverbindung mit dem ersten Wirbelschichtreaktor (12) steht.

## Revendications

1. Procédé de commande d'un système de réacteurs comprenant des premier et deuxième réacteurs à lit fluidisé (12, 14), un canal de gaz de combustion (30) en liaison d'écoulement de gaz avec le premier réacteur à lit fluidisé (12) et un canal de gaz de produit (58) en liaison d'écoulement de gaz avec le deuxième réacteur à lit fluidisé, le procédé comprenant les étapes de
- alimentation de combustible solide (24) et de gaz contenant de l'oxygène (22, 20) vers le premier réacteur à lit fluidisé (12) de manière à former dans celui-ci un lit fluidisé de particules et combustion d'une première partie du combustible solide dans le lit fluidisé de particules avec le gaz contenant de l'oxygène de manière à générer des particules de lit chaudes et un premier flux de gaz de combustion chaud,
- transport du premier flux de gaz de combustion chaud vers le canal de gaz de combustion (30),
- transfert (34, 36) de particules de lit chaudes incluant une deuxième partie du combustible solide à une vitesse de transfert de particules chaudes prédéterminée à partir du premier réacteur à lit fluidisé (12) vers le deuxième réacteur à lit fluidisé (14),
- alimentation de gaz de fluidisation (42) vers le deuxième réacteur à lit fluidisé (14) de manière à former dans celui-ci un deuxième lit fluidisé de particules, et
- transfert (52) de particules de lit à partir du deuxième réacteur à lit fluidisé (14) vers le premier réacteur à lit fluidisé (12) ;
dans lequel le procédé comprend des premier et deuxième modes de fonctionnement, dans lequel, dans le premier mode de fonctionnement, le gaz de fluidisation est du gaz contenant de l'oxygène et le procédé comprend les étapes de
- combustion d'une partie de la deuxième partie du combustible solide dans le deuxième lit fluidisé de particules de manière à générer un deuxième flux de gaz de combustion chaud, et
- transport du deuxième flux de gaz de combustion chaud vers le canal de gaz de combustion (30),
et dans lequel, dans le deuxième mode de fonctionnement, le gaz de fluidisation comprend de la vapeur, du CO₂ ou du gaz inerte ne contenant pas d'oxygène, et le procédé comprend les étapes de
- pyrolise ou gazéification d'une partie de la deuxième partie du combustible solide dans le deuxième lit fluidisé de particules de manière à générer du gaz de produit, et
- transport du gaz de produit vers le canal de gaz de produit (58).

2. Procédé de commande d'un système de réacteurs selon la revendication 1, **caractérisé en ce que** le premier réacteur à lit fluidisé (12) est ralenti par commutation du système de réacteurs du premier mode de fonctionnement vers le deuxième mode de fonctionnement.

3. Procédé de commande d'un système de réacteurs selon la revendication 2, **caractérisé en ce que** dans le deuxième mode de fonctionnement, la vitesse de transfert de particules chaudes prédéterminée est d'au moins 20 % plus élevée que dans le premier mode de fonctionnement.

4. Procédé de commande d'un système de réacteurs selon la revendication 1, **caractérisé en ce que** dans le premier mode de fonctionnement, la vitesse de transfert de particules chaudes prédéterminée et la vitesse d'alimentation en gaz de fluidisation sont commandées de manière à maintenir le deuxième réacteur à lit fluidisé (14) au moins à une température prédéfinie.

5. Procédé de commande d'un système de réacteurs selon la revendication 4, **caractérisé en ce que** la température prédéfinie est d'au moins 400 °C.

6. Procédé de commande d'un système de réacteurs selon la revendication 1, **caractérisé en ce que** dans le deuxième mode de fonctionnement, la vitesse de transfert de particules chaudes prédéterminée est commandée de manière à maintenir le deuxième réacteur à lit fluidisé (14) au moins à une température prédéfinie de pyrolise ou de gazéification.

7. Procédé de commande d'un système de réacteurs selon la revendication 6, **caractérisé en ce que** la température prédéfinie de pyrolise ou de gazéification est d'au moins 400 °C.

8. Procédé de commande d'un système de réacteurs selon l'invention l'une quelconque des revendications précédentes, **caractérisé en ce que** le deuxième mode de fonctionnement comprend une étape d'alimentation d'un deuxième combustible solide vers le deuxième réacteur à lit fluidisé (14).

9. Système de réacteurs à lit fluidisé (10, 10', 10") comprenant
- des premier et deuxième réacteurs à lit fluidisé (12, 14), dans lequel le premier réacteur à lit fluidisé (12) comprend un séparateur de particules (26) et un canal de gaz de combustion (30) permettant de transporter du gaz de combustion à partir du séparateur de particules (26) vers un passage arrière, et le deuxième réacteur à lit fluidisé (14) comprend un canal de gaz d'échappement (54),
- un moyen d'alimentation en combustible solide (24) et un moyen d'alimentation en gaz contenant de l'oxygène (22, 20) vers le premier réacteur à lit fluidisé (12),
- un moyen de transfert de particules de lit (34, 36) à partir du premier réacteur à lit fluidisé (12) vers le deuxième réacteur à lit fluidisé (14),
- un moyen d'alimentation en gaz de fluidisation (42) vers le deuxième réacteur à lit fluidisé, lequel est en liaison d'écoulement de gaz commandable (46) avec une alimentation de l'un au moins parmi de la vapeur, du CO₂ et du gaz inerte ne contenant pas d'oxygène, et
- un moyen de transfert de particules de lit (52) à partir du deuxième réacteur à lit fluidisé (14) vers le premier réacteur à lit fluidisé (12),
dans lequel
- le moyen d'alimentation en gaz de fluidisation (42) vers le deuxième réacteur à lit fluidisé (14) est en liaison d'écoulement de gaz commandable (44) avec le moyen d'alimentation en gaz contenant de l'oxygène (22, 20) vers le premier réacteur à lit fluidisé (12), et
- le canal de gaz d'échappement (54) du deuxième réacteur à lit fluidisé (14) et en liaison d'écoulement commandable (56, 60) avec le canal de gaz de combustion (30) du premier réacteur à lit fluidisé (12) et avec un canal de gaz de produit (58) du deuxième réacteur à lit fluidisé (14).

10. Système de réacteurs à lit fluidisé selon la revendication 9, **caractérisé en ce que** le moyen de transfert de particules de lit (34) à partir du premier réacteur à lit fluidisé vers le deuxième réacteur à lit fluidisé comprend un dispositif de commande d'écoulement de particules (36).

11. Système de réacteurs à lit fluidisé selon la revendication 10, **caractérisé en ce que** le dispositif de commande d'écoulement de particules (36) est un dispositif de commande d'écoulement mécanique ou pneumatique ou comprend un lit fluidisé.

12. Système de réacteurs à lit fluidisé selon la revendication 11, **caractérisé en ce que** le moyen d'alimentation en gaz de fluidisation comprend un canal doté d'une soupape (44) vers une alimentation en gaz contenant de l'oxygène et un canal doté d'une soupape (46) vers une alimentation en vapeur, en CO₂ ou en gaz inerte ne contenant pas d'oxygène.

13. Système de réacteurs à lit fluidisé selon la revendication 9, **caractérisé en ce que** la liaison d'écoulement de gaz d'échappement commandable comprend un canal doté d'une soupape (60) vers le canal de gaz de combustion (30) et un canal doté d'une soupape (56) vers le canal de gaz de produit.

14. Système de réacteurs à lit fluidisé selon la revendication 9, **caractérisé en ce que** le canal de gaz de produit (58) est en liaison d'écoulement de gaz avec un réservoir de gaz de produit (64), lequel est en liaison d'écoulement de gaz avec un brûleur (68) conçu pour produire et transporter du gaz chaud vers une chambre de surchauffage (70) agencée dans le canal de gaz de combustion (30).

15. Système de réacteurs à lit fluidisé selon la revendication 9, **caractérisé en ce que** le canal de gaz de produit (58) est en liaison d'écoulement de gaz avec un réservoir de gaz de produit (64), lequel est en liaison d'écoulement de gaz avec le premier réacteur à lit fluidisé (12).
